# EUROPEAN PATENT SPECIFICATION

(11) **EP 3 214 136 B1**
(45) Date of publication and mention of the grant of the patent: **28.09.2022**
(21) Application number: 15854704.2
(22) Date of filing: 05.10.2015
(51) Int. Cl.: C08L 101/00, B29C 45/00, C08K 7/02, C08K 7/16, C08L 61/06, C08L 63/00

(54) **MOLDING MATERIAL, MOLDED PRODUCT, AND METHOD FOR PRODUCING MOLDED PRODUCT**
FORMMATERIAL, FORMPRODUKT UND VERFAHREN ZUR HERSTELLUNG EINES FORMPRODUKTS
MATÉRIAU DE MOULAGE, PRODUIT MOULÉ ET PROCÉDÉ DE PRODUCTION D'UN PRODUIT MOULÉ

(30) Priority: 31.10.2014 JP 2014222875
(43) Date of publication of application: 06.09.2017
(73) Proprietor: Sumitomo Bakelite Co.,Ltd., Tokyo 140-0002 (JP)
(72) Inventor: WATANABE Yusuke, Tokyo 140-0002 (JP)
(74) Representative: Ter Meer Steinmeister & Partner
(86) International application number: PCT/JP2015/078147
(87) International publication number: WO 2016/067834

(56) References cited:
- JP-A- H0 370 769
- JP-A- H03 146 541
- JP-A- H05 287 177
- JP-A- S62 207 330
- JP-A- S62 263 223
- JP-A- 2000 298 902
- JP-A- 2001 316 587
- JP-A- 2005 068 241
- US-A1- 2011 089 371
- DATABASE WPI Week 198742 Thomson Scientific, London, GB; AN 1987-296489 XP002780752, -& JP S62 209128 A (TOSHIBA KK) 14 September 1987 (1987-09-14)

## Description

### TECHNICAL FIELD

The present invention relates to a molding material, a molded article, and a method for manufacturing a molded article.

### BACKGROUND ART

Today, for the members constituted with a metal or ceramic that are used as internal parts of automobile parts or electronic instruments, the techniques for lightening their weight are being developed. As one of the approaches, an attempt is made to substitute the material constituting these members with a material formed of resin.

For being used as described above, the members are particularly required to have mechanical strength as a molded article. In this respect, for the purpose of improving the mechanical strength, in the related art, a fibrous filler such as glass fiber or carbon fiber is blended with a molding material.

Regarding the aforementioned technique, a technique of combining fillers other than the fibrous filler in addition to the fibrous filler is also known.

For example, in the technique described in Patent Document 1, as a phenolic resin molding material, not only glass fiber but also ground glass fiber treated with resin is added. Patent Document 1 describes that, as a result, it is possible to obtain a molded article excellent in heat resistance, heat-resistant strength, and bending deflection.

Patent Document 2 describes a technique relating to a pulley made of a resin. Patent Document 2 describes that, at the time of manufacturing the pulley made of a resin, as a material to be blended that is mainly formed of a phenolic resin, a filler selected from the group consisting of glass fiber, glass beads, silica powder, aluminum-silica powder, and glass powder is combined, and in this way, the abrasion of a belt is inhibited, and the abrasion resistance, dimensional stability, and heat resistance of the pulley are improved.

JP S62 209128 A discloses a composition comprising (A) an epoxy resin, (E) a spherical silica powder having a mean grain size of 5-50 microns, and (F) glass fibres having a mean fibre diameter of 20 microns or less, a mean length of 150 microns or less and having a Na ion content of 100 ppm or less.

### RELATED DOCUMENT

### PATENT DOCUMENT

[Patent Document 1] Japanese Laid-open Patent Publication No. 2000-219796
[Patent Document 2] Japanese Laid-open Patent Publication No. 2-92628

### SUMMARY OF THE INVENTION

### TECHNICAL PROBLEM

As a result of investigating those molding materials, the inventors of the present invention found that they have the following problems.

That is, when the fibrous filler is blended as a molding material, in a molding step of obtaining a molded article from the molding material, the fibrous filler tends to be oriented in a direction approximately parallel to a flow direction.

Consequently, when the characteristics are analyzed in detail in the flow direction and a direction orthogonal thereto, the values of the characteristics are found to vary in some cases. That is, worryingly, the molded article has anisotropicity as a characteristic thereof.

For the use such as internal parts of automobile parts or electronic instruments, currently, there is a strong demand for a material whose characteristics can be stably improved in both of the directions described above.

The present invention has been made to solve the above problems, and provides a molding material to which a fibrous filler is incorporated to improve the mechanical strength and which does not easily express anisotropicity as a molded article.

### SOLUTION TO PROBLEM

According to the present invention, there is provided a molding material containing (A) thermosetting resin and (B) filler, in which provided that a total amount of the molding material is 100 parts by volume, a content of the (B) filler is equal to or greater than 35 parts by volume and equal to or less than 80 parts by volume, the (B) filler contains (B1) fibrous filler and (B2) spherical filler, provided that a total amount of the (B) filler is 100 parts by volume, a content of the (B2) spherical glass bead filler is equal to or greater than 40 parts by volume and equal to or less than 95 parts by volume, and provided that a number-average fiber diameter of the (B1) fibrous filler is d, an average particle size of the (B2) spherical glass bead filler is within a range of equal to or greater than 2.5 d and equal to or less than 6.5 d.

According to the present invention, there is also provided a molded article obtained by molding the molding material.

According to the present invention, there is also provided a method for manufacturing a molded article, including a step of molding the aforementioned molding material, in which the step of molding the molding material is performed by compression molding, transfer molding, or injection molding.

### ADVANTAGEOUS EFFECTS OF INVENTION

The molding material of the present invention contains a fibrous filler and a spherical filler. The spherical filler adopted has an average particle size greater than a number-average fiber diameter of the fibrous filler by a specific factor, and the content of the spherical filler is controlled.

Although the concrete mechanism that brings about the effect is unclear, by using the specific spherical filler described above, the fibrous filler can be randomly disposed in voids between the spherical fillers that are appropriately dispersed.

That is, it is considered that, a molded article can be obtained from the molding material in which the fibrous filler is randomly disposed, and consequently, the molded article is inhibited from expressing anisotropicity.

### BRIEF DESCRIPTION OF THE DRAWINGS

The aforementioned object and other objects, characteristics, and advantages will be further clarified by the preferred embodiment described below and the accompanying drawing described below.

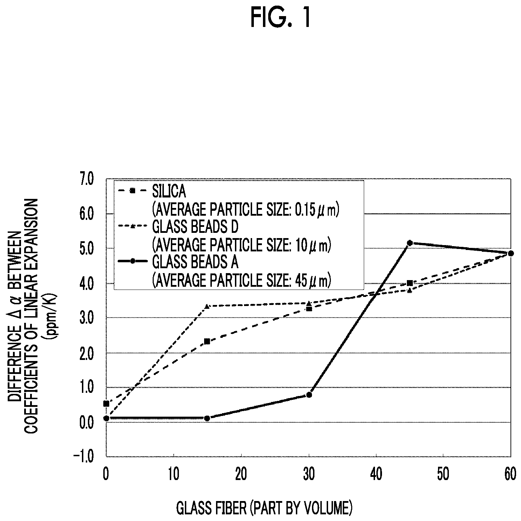

FIG. 1 is a graph showing the results obtained by screening the molding materials in Example 1 and Comparative Examples 1 and 2 regarding the amount of a fibrous filler and a spherical filler.

### DESCRIPTION OF EMBODIMENTS

Hereinafter, the present invention will be specifically described based on embodiments. In the present specification, unless otherwise specified, "to" represents "equal to or greater than the number before to and equal to or less than the number after to".

The molding material of the present embodiment has the following characteristics.

That is, the molding material of the present embodiment contains (A) thermosetting resin and (B) filler, in which provided that a total amount of the molding material is 100 parts by volume, a content of the (B) filler is equal to or greater than 35 parts by volume and equal to or less than 80 parts by volume, the (B) filler contains (B1) fibrous filler and (B2) spherical glass bead filler, provided that a total amount of the (B) filler is 100 parts by volume, a content of the (B2) spherical filler is equal to or greater than 40 parts by volume and equal to or less than 95 parts by volume, and provided that a number-average fiber diameter of the (B1) fibrous filler is d, an average particle size of the (B2) spherical glass bead filler is within a range of equal to or greater than 2.5 d and equal to or less than 6.5 d.

Hereinafter, each of the components blended as the molding material according to the present embodiment and the amount thereof blended will be described.

### [(A) Resin]

Examples of the thermosetting resin include a novolac-type phenolic resin such as a phenol novolac resin, a cresol novolac resin, or a bisphenol A novolac resin; a phenolic resin like a resol-type phenolic resin such as an unmodified resol phenolic resin or an oil-modified resol phenolic resin modified with tung oil, linseed oil, or walnut oil; a biphenyl-type epoxy resin such as a bisphenol A epoxy resin or a bisphenol F epoxy resin, a novolac-type epoxy resin such as a novolac epoxy resin or a cresol novolac epoxy resin; an epoxy resin such as a biphenyl-type epoxy resin or a tris(hydroxyphenyl)methane-type epoxy resin; a triazine ring-containing resin such as a urea resin or a melamine resin; an unsaturated polyester resin, a bismaleimide resin, a polyurethane resin, a diallyl phthalate resin, a silicone resin, a benzoxazine ring-containing resin, a cyanate ester resin, and the like.

Among these, one or more kinds of resins selected from phenolic resins or epoxy resins are particularly preferably used, and in this way, the molding material secures high fluidity.

In a case where a novolac-type phenolic resin is used as the (A) resin, hexamethylenetetramine can be combined as a curing agent. The content of hexamethylenetetramine is not particularly limited. It is preferable to use hexamethylenetetramine in an amount of 10 to 20 parts by mass with respect to 100 parts by mass of the novolac-type phenolic resin.

By setting the content of hexamethylenetetramine to be within the above range, it is possible to appropriately adjust the curing time with retaining the required mechanical strength.

In a case where an epoxy resin is used as the (A) resin, a curing agent may be used in combination. The curing agent which can be used herein is not particularly limited, and examples thereof include an amine compound such as aliphatic polyamine, aromatic polyamine, or diaminediamide, an acid anhydride such as an alicyclic acid anhydride or an aromatic acid anhydride, a polyphenol compound such as a novolac-type phenolic resin, an imidazole compound, and the like. Among these, in view of the handleability and the environment, a phenolic resin can be preferably used. Such a curing agent can be blended in an amount represented by a theoretical mole ratio that is within a range of 0.8 to 1.4 with respect to an epoxy resin.

If necessary, a known curing accelerator may be used together with the curing agent, within a range that does not hinder the reaction of the thermosetting resin.

Provided that the total amount of the molding material is 100 parts by volume, the content of the (A) resin is preferably set to be within a range of equal to or greater than 20 parts by volume and equal to or less than 65 parts by volume.

Provided that the total amount of the molding material is 100 parts by volume, the lower limit of the content of the (A) resin is more preferably set to be equal to or greater than 25 parts by volume, and even more preferably set to be equal to or greater than 30 parts by volume.

Provided that the total amount of the molding material is 100 parts by volume, the upper limit of the content of the (A) resin is more preferably set to be equal to or less than 63 parts by volume, even more preferably set to be equal to or less than 60 parts by volume, and particularly preferably set to be equal to or less than 55 parts by volume.

By setting the content of the (A) resin as described above, it is possible to cause the molding material to express appropriate fluidity with retaining the mechanical strength.

In the present specification, the "content of the (A) resin" is described as an amount of the resin plus the amount of the curing agent or the curing accelerator added to the resin.

Furthermore, in the present specification, regarding a generally marketed resin material that already contains a curing agent or the like, it is preferable that the volume-based amount of the molding material is set to be within the above range.

### [(B) filler]

As the (B) filler used in the molding material of the present embodiment, a known filler can be selected and used. The (B) filler contains at least (B1) fibrous filler and (B2) spherical filler.

Provided that the total amount of the molding material is 100 parts by volume, the content of the (B) filler is equal to or greater than 35 parts by volume and equal to or less than 80 parts by volume.

Provided that the total amount of the molding material is 100 parts by volume, the lower limit of the content of the (B) filler is more preferably set to be equal to or greater than 37 parts by volume, even more preferably set to be equal to or greater than 40 parts by volume, and particularly preferably set to be equal to or greater than 45 parts by volume.

Provided that the total amount of the molding material is 100 parts by volume, the upper limit of the content of the (B) filler is more preferably set to be equal to or less than 75 parts by volume, and even more preferably set to be equal to or less than 70 parts by volume.

By setting the content to be within the above range, it is possible to improve the heat resistance or mechanical strength of the molded article.

Hereinafter, the (B1) fibrous filler and the (B2) spherical filler contained in the (B) filler will be described.

### [(B1) Fibrous filler]

As the (B1) fibrous filler, for example, it is possible to use glass fiber, wollastonite fiber, carbon fiber, plastic fiber, and the like. As plastic fiber, for example, aramid fiber (aromatic polyamide) is used. Furthermore, as the (B1) fibrous filler, inorganic fiber such as basalt fiber or metal fiber such as stainless steel fiber can also be used.

Among these, a filler selected from the group consisting of glass fiber, wollastonite fiber, and carbon fiber is preferable, because the filler can improve the mechanical strength of the molded article and favors the lightening of the molded article.

In a case where glass fiber is used as the (B1) fibrous filler, specific examples of glass constituting the glass fiber include E glass, C glass, A glass, S glass, D glass, NE glass, T glass, and H glass. Among these, E glass, A glass, T glass, or S glass is preferable. The use of such glass makes it possible to impart high elasticity to the glass fiber-reinforced material and to reduce the coefficient of thermal expansion.

As the carbon fiber used as the (B1) fibrous filler, for example, high-strength carbon fiber having a tensile strength of equal to or greater than 3,500 MPa or a carbon fiber with a high elastic modulus having an elastic modulus of equal to or greater than 230 GPa is used. Although the carbon fiber may be based on polyacrylonitrile (PAN) or pitch, the PAN-based carbon fiber is preferable because it has high tensile strength.

The number-average fiber diameter of the (B1) fibrous filler contained in the molding material of the present embodiment can be appropriately set according to the use of the molded article or the like. The lower limit of the number-average fiber diameter is preferably set to be equal to or greater than 3 µm, more preferably set to be equal to or greater than 5 µm, and even more preferably set to be equal to or greater than 8 µm.

The upper limit of the number-average fiber diameter is preferably set to be equal to or less than 50 µm, more preferably set to be equal to or less than 30 µm, and even more preferably set to be equal to or less than 20 µm.

The use of the (B1) fibrous filler having the number-average fiber diameter described above makes it possible to effectively improve the mechanical strength of the molded article.

The number-average fiber diameter can be measured and determined by observing the fiber that appears in a cross-section of the molded article by using a scanning electron microscope, a transmission electron microscope, an atomic force microscope, or the like.

For example, in a case where the fiber is measured using a scanning electron microscope, by measuring a random number of the (B1) fibrous fillers within a cross-section of the molded article, the average of the diameters thereof can be calculated.

More specifically, by measuring 100 strands of the (B1) fibrous filler whose transverse section is confirmable, the average of the minimum diameters of the cross-sections of the respective fibers can be determined as the number-average fiber diameter.

The initial fiber length of the (B1) fibrous filler of the present embodiment can be arbitrarily set. However, because the fibrous filler is folded through the steps such as kneading, grinding, and molding, the number-average fiber length obtained by measuring the fiber present in the molded article is defined as the number-average fiber length of the (B1) fibrous filler in the present invention (that is, the number-average fiber diameter of the (B1) fibrous filler contained in the molding material).

The number-average fiber length of the (B1) fibrous filler contained in the molding material and the molded article of the present embodiment can be adjusted by appropriately selecting a kneader, the kneading conditions, the viscosity of the material, and the like.

The number-average fiber length of the (B1) fibrous filler of the present embodiment can be appropriately adjusted according to the use of the molded article or the like. The lower limit of the number-average fiber length is preferably adjusted to be equal to or greater than 10 µm, more preferably adjusted to be equal to or greater than 30 µm, and even more preferably adjusted to be equal to or greater than 50 µm.

The upper limit of the number-average fiber length is preferably adjusted to be equal to or less than 1 mm, more preferably adjusted to be equal to or less than 500 µm, and even more preferably adjusted to be equal to or less than 300 µm.

The use of the (B1) fibrous filler having the number-average fiber length described above makes it possible to improve the fluidity at the time of molding and to improve the mechanical strength of the molded article.

The number-average fiber length of the (B1) fibrous filler specified herein can be determined by the same method as used for determining the number-average fiber diameter. Within a cross-section of the molded article, a random number of the (B1) fibrous fillers are measured among the (B1) fibrous fillers whose both ends are confirmable, and the average of the lengths thereof can be calculated. In this case, at the time of calculating the average, the average of the measured lengths of 50 strands of the randomly selected (B1) fibrous filler can be determined as the number-average fiber length.

The lower limit of a ratio between the number-average fiber length and the number-average fiber diameter (aspect ratio) of the (B1) fibrous filler contained in the molding material and the molded article of the present embodiment is preferably set to be equal to or higher than 3, more preferably set to be equal to or higher than 5, and even more preferably set to be equal to or higher than 10.

The upper limit of the ratio is preferably set to be equal to or lower than 30, more preferably set to be equal to or lower than 27, and even more preferably set to be equal to or lower than 24.

By setting the aspect ratio as described above, the (B2) spherical filler and the (B1) fibrous filler easily interact, and the expression of anisotropicity can be effectively inhibited.

Provided that the total amount of the (B) filler is 100 parts by volume, the lower limit of the content of the (B1) fibrous filler in the molding material of the present embodiment is, for example, equal to or greater than 5 parts by volume, preferably equal to or greater than 10 parts by volume, and more preferably equal to or greater than 20 parts by volume.

Provided that the total amount of the (B) filler is 100 parts by volume, the upper limit of the content of the (B1) fibrous filler in the molding material of the present embodiment is, for example, equal to or less than 60 parts by volume, preferably equal to or less than 58 parts by volume, and more preferably equal to or less than 55 parts by volume.

Provided that the total amount of the molding material is 100 parts by volume, the lower limit of the content of the (B1) fibrous filler in the molding material of the present embodiment is, for example, equal to or greater than 1 part by volume, preferably equal to or greater than 5 parts by volume, and more preferably equal to or greater than 10 parts by volume.

Furthermore, provided that the total amount of the molding material is 100 parts by volume, the upper limit of the content of the (B1) fibrous filler in the molding material of the present embodiment is, for example, equal to or less than 50 parts by volume, preferably equal to or less than 45 parts by volume, and more preferably equal to or less than 40 parts by volume.

By setting the content of the (B1) fibrous filler to be within the above range, it is possible to effectively improve the mechanical strength of the obtained molded article.

### [(B2) spherical filler]

Glass beads have high heat resistance and are highly available.

Provided that the number-average fiber diameter of the (B1) fibrous filler described above is d, the average particle size of the (B2) spherical glass bead filler contained in the molding material of the present embodiment is set to be within a range of equal to or greater than 2.5 d and equal to or less than 6.5 d.

By setting the average particle size as described above, it is possible to make the (B1) fibrous filler randomly oriented at the time of molding and to inhibit the obtained molded article from expressing anisotropicity.

For the purpose of more efficaciously bring about the aforementioned effects, it is preferable to set the lower limit of the average particle size of the (B2) spherical glass bead filler to be equal to or greater than 3.0. For the same purpose, it is preferable to adopt an aspect in which the upper limit of the average particle size of the (B2) spherical glass bead filler is set to be equal to or less than 6.0.

The average particle size of the (B2) spherical glass bead filler contained in the molding material of the present embodiment can be appropriately set according to the use of the molded article or the like. The lower limit of the average particle size is preferably set to be equal to or greater than 12 µm, more preferably set to be equal to or greater than 15 µm, and even more preferably set to be equal to or greater than 20 µm.

The upper limit of the average particle size is preferably set to be equal to or less than 100 µm, more preferably set to be equal to or less than 90 µm, and even more preferably set to be equal to or less than 80 µm.

The use of the (B2) spherical glass bead filler having the average particle size described above makes it possible to randomly orient the (B1) fibrous filler at the time of molding with retaining the fluidity of the molding material, and to inhibit the obtained molded article from expressing anisotropicity.

Similarly to the (B1) fibrous filler, the average particle size of the (B2) spherical filler is measured and determined by observing the fiber by using a scanning electron microscope.

The molded article is fired in an inert atmosphere such that organic components are removed, a random number of the (B2) spherical glass bead fillers in the residues are measured, and the average of the particle sizes thereof can be calculated.

More specifically, the average of the measured particle sizes obtained by measuring the (B2) spherical glass bead filler at 50 spots can be determined as the average particle size.

Provided that the total amount of the (B) filler is 100 parts by volume, the lower limit of the content of the (B2) spherical filler in the molding material of the present embodiment is equal to or greater than 40 parts by volume, preferably equal to or greater than 42 parts by volume, and more preferably equal to or greater than 45 parts by volume.

Provided that the total amount of the (B) filler is 100 parts by volume, the upper limit of the content of the (B2) spherical glass bead filler in the molding material of the present embodiment is equal to or less than 95 parts by volume, preferably equal to or less than 90 parts by volume, and more preferably equal to or less than 80 parts by volume.

Provided that the total amount of the molding material is 100 parts by volume, the lower limit of the content of the (B2) spherical glass bead filler in the molding material of the present embodiment is for example equal to or greater than 1 part by volume, preferably equal to or greater than 5 parts by volume, and more preferably equal to or greater than 10 parts by volume.

Provided that the total amount of the molding material is 100 parts by volume, the upper limit of the content of the (B2) spherical glass bead filler in the molding material of the present embodiment is for example equal to or less than 50 parts by volume, preferably equal to or less than 45 parts by volume, and more preferably equal to or less than 40 parts by volume.

By setting the content of the (B2) spherical glass bead filler to be within the above range, it is possible to effectively improve the fluidity of the molding material, and the array of the (B1) fibrous filler can be easily controlled.

### [Other additives]

If necessary, the molding material according to the present embodiment may be blended with various additives used in general molding materials, for example, a mold release agent such as stearic acid, calcium stearate, or polyethylene, a curing assistant such as magnesium oxide, calcium hydroxide, or triphenylphosphine, a coloring agent such as carbon black, an adhesion enhancer for enhancing the adhesion between a filler and a thermosetting resin, a coupling agent, and a solvent.

### [Method for manufacturing molding material]

The molding material according to the present embodiment can be manufactured by, for example, a method in which the respective components described above are blended and homogeneously mixed together, then melted and kneaded with heating by using a kneading device such as a roller, a co-kneader, or a twin-screw extruder singly or by using a combination of a roll and other mixing devices, and then granulated or ground.

### [Characteristics]

It is preferable that the molding material according to the present embodiment satisfies the following characteristics.

### (Difference Δα between coefficients of linear expansion)

It is preferable that the absolute value of a difference Δα between coefficients of linear expansion of the molding material of the present embodiment that is measured under the following conditions is equal to or less than 2.5 ppm/K.

### (Conditions)

First, by using the molding material, a molded object having a size of 80 × 10 × 4 mm is prepared by injection molding under the conditions of a gate size: 8 × 3 mm, an injection pressure: 150 MPa, a mold temperature: 175°C, and a filling time: 4 seconds by making a longitudinal direction become a flow direction. From the molded object, a test piece having a size of 10 × 10 × 4 mm is cut out.

Then, under the compression condition of 5°C/min, by using a thermal mechanical analyzer TMA, a coefficient of linear expansion α₁ in the flow direction and a coefficient of linear expansion α₂ in the direction orthogonal to the flow direction within a range of 25°C to 150°C are calculated.

Finally, by subtracting α₁ from α₂, Δα is calculated.

That is, because the (B2) spherical filler is appropriately combined with the (B1) fibrous filler in the molding material of the present embodiment, anisotropicity is not easily expressed, and the difference between the coefficient of linear expansion α₁ in the flow direction and the coefficient of linear expansion α₂ in the orthogonal direction tends to become small.

That is, the absolute value of the difference Δα is preferably controlled to be equal to or less than 2.5 ppm/K, and more preferably controlled to be equal to or less than 2.0 ppm/K. The molding material satisfying the aforementioned requirement can be used for various purposes such as manufacturing of members used for sites exposed to a high temperature.

The values of α₁ and α₂ depend on the (A) resin, the (B) filler, and the like. The lower limit of the value of α₁ is for example equal to or greater than 10 ppm/K, preferably equal to or greater than 12 ppm/K, and more preferably equal to or greater than 15 ppm/K. The upper limit of the value of α₁ is for example equal to or less than 35 ppm/K, preferably equal to or less than 30 ppm/K, and more preferably equal to or less than 25 ppm/K.

Generally, the value of α₂ is greater than the value of α₁. The lower limit of the value of α₂ is for example equal to or greater than 12 ppm/K, preferably equal to or greater than 14 ppm/K, and more preferably equal to or greater than 17 ppm/K. The upper limit of the value of α₂ is for example equal to or less than 37 ppm/K, preferably equal to or less than 32 ppm/K, and more preferably equal to or less than 27 ppm/K.

### (Fluidity)

It is preferable that the molding material of the present embodiment has high fluidity.

More specifically, it is preferable that the value of a minimum melting torque, which is measured using LABO PLASTOMILL (manufactured by TOYO SEIKI SEISAKU-SHO, LTD.) under the conditions of a temperature of 130°C and a rotation frequency of 30 rpm, is set to be within a range of equal to or greater than 1.5 N·m and equal to or less than 35 N·m. By setting the minimum melting torque to be within the above range, the filling rate at the time of injection molding is easily controlled.

### (Flexural strength)

It is preferable that a test piece prepared from the molding material of the present embodiment according to the following (Conditions for preparing test piece at the time of measuring flexural strength) is adjusted such that the flexural strength thereof in a "flow direction" and an "orthogonal direction" has the following characteristics.

The "flexural strength" is a value measured based on ISO 178.

### (Conditions for preparing test piece at the time of measuring flexural strength)

By injection molding, the molding material is made into a molded object having a size of 60 × 60 × 2 mm specified in ISO 294-4, under the conditions of an injection pressure: 150 MPa and a mold temperature: 175°C. From the molded object, test pieces having a size of 60 × 10 × 2 mm are cut out along each of the flow direction and the orthogonal direction such that the test pieces include the central portion of the molded object.

Then, for the obtained test pieces, the flexural strength in the flow direction and the flexural strength in the orthogonal direction are measured based on ISO 178.

That is, a value obtained by dividing the "flexural strength in the orthogonal direction" of the test piece, which is prepared from the molding material of the present embodiment under the aforementioned conditions, by the "flexural strength in the flow direction" of the same test piece is preferably adjusted to be equal to or greater than 0.70, and more preferably adjusted to be equal to or greater than 0.75.

By adjusting the value as described above, the obtained molded article can also be used as a member to which stress is applied from various directions.

### [Molded article]

The molded article according to the present embodiment can be obtained using the aforementioned molding material through a molding step. As a specific molding method, for example, it is possible to appropriately select conditions from known molding methods such as compression molding, transfer molding, and injection molding.

For example, in a case where a thick molded article having a thickness of about 5 mm is molded by injection molding, as the conditions at this time, it is possible to adopt the conditions of a mold temperature: 170°C to 190°C, a molding pressure: 100 to 150 MPa, and a curing time: 30 to 90 seconds, although the conditions also depend on the thickness of the molded article.

### [Use]

In a case where a molded article is obtained from the molding material of the present embodiment, it is possible to make the molded article have appropriate mechanical strength without causing the molded article to express anisotropicity. Accordingly, the molded article is expected to be used as a member at the site to which force is applied from various directions.

Furthermore, in a case where a molded article is obtained from the molding material of the present embodiment, the absolute value of the aforementioned Δα tends to be reduced. Therefore, the molded article is expected to be used as a member that can sufficiently endure the environment in which the temperature changes.

Consequently, the molded article is expected to be used for various purposes such as an internal member of automobiles or precision instruments.

It goes without saying that the use of the molded article mentioned herein is merely an example of the embodiment in which the present invention is used, and the composition or the like of the molding material of the present invention can be optimized for other uses.

Hitherto, the embodiments of the present invention have been described. However, these are merely examples of the present invention, and various constitutions other than the above can be adopted.

### Examples

Hereinafter, the present invention will be more specifically described based on examples, but the scope of the present invention is not limited to the examples and the like.

First, the raw material components used in each of examples and comparative examples will be shown below.
(1) Novolac-type phenolic resin A: PR-51305 (manufactured by Sumitomo Bakelite Co., Ltd.)
(2) Hexamethylenetatramine: HEXAMINE SUPERFINE (manufactured by Chang Chun Petrochemical Co., LTD.)
(3) Epoxy resin: tris(hydroxyphenyl)methane-type epoxy resin, EPPN-502H (manufactured by Nippon Kayaku Co., Ltd.)
(4) Novolac-type phenolic resin B: PR-51470 (manufactured by Sumitomo Bakelite Co. Ltd.)
(5) Glass fiber: CS3E479 (manufactured by Nitto Boseki Co., Ltd., number-average fiber diameter: 11 µm, number-average fiber length: 3 mm)
(6) Carbon fiber: HT C413 (manufactured by Toho Tenax Co., Ltd., number-average fiber diameter: 7 µm, number-average fiber length: 6 mm)
(7) Glass beads A: UB-13LA (manufactured by UNITIKA Ltd., average particle size: 45 µm)
(8) Glass beads B: UB-SPL-30 (manufactured by UNITIKA Ltd., average particle size: 30 µm)
(9) Glass beads C: 2530 (manufactured by Potters Industries LLC, average particle size: 65 µm)
(10) Glass beads D: 5000 (manufactured by Potters Industries LLC, average particle size: 10 µm)
(11) Silica: SIDISTAR (manufactured by Elkem, average particle size: 0.15 µm)
(12) Magnesium oxide: KYOWAMAG 30 (manufactured by Kyowa Chemical Industry Co., Ltd.)
(13) Triphenylphosphine: triphenylphosphine (manufactured by Wako Pure Chemical Industries, Ltd.)
(14) Calcium stearate: Ca-St (manufactured by NITTO CHEMICAL INDUSTRY CO., LTD.)
(15) Carbon black: carbon black #750 (manufactured by Mitsubishi Chemical Corporation)

In Examples 1 to 6 and Comparative Examples 1 to 3, a material mixture, which was obtained by blending the respective components according to the blending amount shown in the following Table 1, was kneaded using a heating rolls with different rotation speeds, cooled in the form of sheet, and ground, thereby obtaining granular molding material.

The kneading conditions of the heating rolls were set such that the rotation speed became high-speed roll/low-speed roll = 20/14 rpm, the temperature became high-speed roll/low-speed roll = 90/20°C, and the kneading time became 5 to 10 minutes.

Each of the molding materials obtained at the blending ratio shown in Table 1 was measured and evaluated as below.

Regarding the obtained molding material, a cross-section of a test piece obtained in the following Evaluation item (1) was measured using a scanning electron microscope. Then, among fibrous fillers whose both ends were confirmable, 50 strands of fibers were measured to determine the fiber length, and the average of the measured lengths were determined as a number-average fiber length. The results are summarized in Table 1.

### (1) Coefficient of linear expansion

By using the molding material obtained in each of examples and comparative examples, a molded object having a size of 80 × 10 × 4 mm was prepared by injection molding under the conditions of a gate size: 8 × 3 mm, an injection pressure: 150 MPa, a mold temperature: 175°C, and a filling time: 4 seconds by making a longitudinal direction become a flow direction. From the molded object, a test piece having a size of 10 × 10 × 4 mm was cut out.

Then, under the compression condition of 5°C/min, by using a thermal mechanical analyzer TMA, a coefficient of linear expansion α₁ in the flow direction and a coefficient of linear expansion α₂ in the direction orthogonal to the flow direction within a range of 25°C to 150°C were measured.

Table 1 shows α₁, α₂, and Δα calculated by subtracting α₁ from α₂.

### (2) Evaluation of fluidity

For the molding material obtained in each of examples and comparative examples, the value of a minimum melting torque was measured using LABO PLASTOMILL (manufactured by TOYO SEIKI SEISAKU-SHO, LTD.) under the measurement conditions of a temperature of 130°C and a rotation frequency of 30 rpm. The results are shown in Table 1.

### (3) Flexural strength

By injection molding, the molding material obtained in each of examples and comparative examples was made into a molded object having a size of 60 × 60 × 2 mm specified in ISO 294-4, under the conditions of an injection pressure: 150 MPa and a mold temperature: 175°C. From the molded object, test pieces having a size of 60 × 10 × 2 mm were cut out along each of the flow direction and the orthogonal direction such that the test pieces included the central portion of the molded object.

Then, for the obtained test pieces, the flexural strength in the flow direction and the flexural strength in the orthogonal direction were measured based on ISO 178.

Table 1 shows the flexural strengths and the value obtained by dividing the "flexural strength in the orthogonal direction" by the "flexural strength in the flow direction" of the test piece.

**[Table 1]**

| | | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|---|
| | (A) resin | Novolac-type phenolic resin A | 32 | 49 | 32 | 32 | 32 | | 32 | 32 | 32 |
| | | Hexamethylenetetramine | 5.5 | 8.5 | 5.5 | 5.5 | 5.5 | | 5.5 | 5.5 | 5.5 |
| | | Epoxy resin | | | | | | 23 | | | |
| | | Novolac-type phenolic resin B | | | | | | 14 | | | |
| | (B1) fibrous filler | Glass fiber (number-average fiber diameter: 11 µm, number-average fiber length: 3 mm) | 30 | 20 | 30 | 30 | | 30 | 30 | 30 | 45 |
| | | Carbon fiber (number-average fiber diameter: 7 µm, number-average fiber length: 6 mm) | | | | | 30 | | | | |
| Blending (part by volume) | (B2) spherical filler | Glass beads A (average particle size: 45 µm) | 30 | 20 | | | 30 | 30 | | | 15 |
| | | Glass beads B (average particle size: 30 µm) | | | 30 | | | | | | |
| | | Glass beads C (average particle size: 65 µm) | | | | 30 | | | | | |
| | | Glass beads D (average particle size: 10 µm) | | | | | | | 30 | | |
| | | Silica (average particle size: 0.15 µm) | | | | | | | | 30 | |
| | Magnesium oxide | | 0.5 | 0.5 | 0.5 | 0.5 | 0.5 | | 0.5 | 0.5 | 0.5 |
| | Triphenylphosphine | | | | | | | 1 | | | |
| | Calcium stearate | | 1 | 1 | 1 | 1 | 1 | 1 | 1 | 1 | 1 |
| | Carbon black | | 1 | 1 | 1 | 1 | 1 | 1 | 1 | 1 | 1 |
| Number-average fiber length of (B1) fibrous filler in obtained molding material (µm) | | | 120 | 200 | 150 | 100 | 180 | 130 | 190 | 220 | 100 |
| | Coefficient of linear expansion α₁ in flow direction (ppm/K) | | 17.4 | 23.0 | 17.2 | 17.5 | 15.7 | 19.3 | 15.7 | 14.3 | 12.6 |
| | Coefficient of linear expansion α₂ in orthogonal direction (ppm/K) | | 18.1 | 25.2 | 18.5 | 18.0 | 17.4 | 20.3 | 19.1 | 17.5 | 17.7 |
| | Difference Δα between coefficients of linear expansion (ppm/K) | | 0.7 | 2.2 | 1.3 | 0.5 | 1.7 | 1.0 | 3.4 | 3.2 | 5.1 |
| Evaluation | Evaluation of fluidity Minimum melting torque determined by LABO PLASTOMILL at 130°C (N·m) | | 3.4 | 2.0 | 3.1 | 4.2 | 3.2 | 2.8 | 4.3 | 3.3 | 4.2 |
| | Flexural strength in flow direction (MPa) | | 210 | 205 | 210 | 200 | 210 | 160 | 215 | 215 | 230 |
| | Flexural strength in orthogonal direction (MPa) | | 170 | 155 | 165 | 180 | 180 | 140 | 140 | 140 | 135 |
| | Flexural strength in orthogonal direction/flexural strength in flow direction | | 0.81 | 0.76 | 0.79 | 0.90 | 0.86 | 0.88 | 0.65 | 0.65 | 0.59 |

As shown in Table 1, in a case where a molded article is obtained from the molding material obtained in examples, the molded article has high strength and does not express anisotropicity.

Accordingly, the molded article could be used as a member at the site to which force is applied from various directions or a member which can endure the environment in which the temperature changes.

In Example 1 and Comparative Examples 1 and 2, while the type of the (A) resin, the (B1) fibrous filler, and the (B2) spherical filler used was fixed, the amount of the (B1) fibrous filler and the (B2) spherical filler was changed. In this state, screening was performed to check how the difference Δα between coefficients of linear expansion changes. The results are shown in FIG. 1.

In the graph, the abscissa axis shows the amount of the fibrous filler (glass fiber) in part by volume, and the total amount of the filler is fixed to 60 parts by volume. That is, "0" on the abscissa axis shows that the molding material contains the spherical filler in an amount of 60 parts by volume. The ordinate axis shows the difference Δα between coefficients of linear expansion.

As shown in FIG. 1, in a case where the glass beads having an average particle size of 10 µm or silica having an average particle size of 0.15 µm is used, the difference Δα between coefficients of linear expansion is found to substantially linearly increase in proportion to the increase of the content of the fibrous filler.

However, in the system using the glass beads having an average particle size of 45 µm, it is found that within an area in which the content of the fibrous filler is equal to or less than a certain value (that is, the content of the spherical filler is equal to or greater than a certain value), the degree of increase of the difference Δα between coefficients of linear expansion is sufficiently suppressed. This implies that, in the system using the glass beads having an average particle size of 45 µm, a certain interaction occurs between the fibrous filler and a filler having a specific size, and hence the behavior different from that in other systems is exhibited.

In a case where a molded article is obtained from the molding material of the present invention, it is possible to make the molded article have appropriate mechanical strength without causing the molded article to express anisotropicity. Accordingly, the molded article could be used as a member at the site to which force is applied from various directions or a member which can endure the environment in which temperature changes.

Therefore, the molded article could be used for various purposes such as an internal member of automobiles or precision instruments.

## Claims

1. A molding material comprising:
(A) thermosetting resin; and
(B) filler,
wherein provided that a total amount of the molding material is 100 parts by volume, a content of the (B) filler is equal to or greater than 35 parts by volume and equal to or less than 80 parts by volume,
the (B) filler contains (B1) fibrous filler and (B2) spherical glass bead filler,
provided that a total amount of the (B) filler is 100 parts by volume, a content of the (B2) spherical glass bead filler is equal to or greater than 40 parts by volume and equal to or less than 95 parts by volume, and
provided that a number-average fiber diameter of the (B1) fibrous filler is d, an average particle size of the (B2) spherical glass bead filler, measured using a scanning electron microscope, is within a range of equal to or greater than 2.5 d and equal to or less than 6.5 d.

2. The molding material according to claim 1,
wherein an aspect ratio of the (B1) fibrous filler is equal to or higher than 3 and equal to or lower than 30.

3. The molding material according to claim 1 or 2,
wherein the (B1) fibrous filler is selected from the group consisting of glass fiber, wollastonite fiber, and carbon fiber.

4. The molding material according to any one of claims 1 to 3,
wherein the (A) resin is a phenolic resin or an epoxy resin.

5. A molded article obtained by molding the molding material according to any one of claims 1 to 4.

6. The molded article according to claim 5, wherein the molded article is an internal member of automobiles.

7. A method for manufacturing a molded article, comprising:
a step of molding the molding material according to any one of claims 1 to 4,
wherein the step of molding the molding material is performed by compression molding, transfer molding, or injection molding.

8. The method according to claim 7, wherein the molded article is an internal member of automobiles.

9. Use of the molding material according to any one of claims 1 to 4 for the manufacture of an internal member of automobiles.

## Patentansprüche

1. Formmaterial, umfassend:
(A) wärmehärtbares Harz; und
(B) Füllstoff,
wobei, vorausgesetzt, dass eine Gesamtmenge des Formmaterials 100 Volumenteile beträgt, ein Gehalt des Füllstoffs (B) gleich oder größer als 35 Volumenteile und gleich oder weniger als 80 Volumenteile ist,
der Füllstoff (B) faserförmigen Füllstoff (B1) und kugelförmigen Glasperlen-Füllstoff (B2) enthält,
wobei, vorausgesetzt, dass eine Gesamtmenge des Füllstoffs (B) 100 Volumenteile beträgt, ein Gehalt des kugelförmigen Glasperlen-Füllstoffs (B2) gleich oder größer als 40 Volumenteile und gleich oder weniger als 95 Volumenteile ist, und
wobei, vorausgesetzt, dass ein zahlenmittlerer Faserdurchmesser des faserförmigen Füllstoffs (B1) d ist, eine durchschnittliche Teilchengröße des kugelförmigen Glasperlen-Füllstoffs (B2), gemessen unter Verwendung eines Rasterelektronenmikroskops, innerhalb eines Bereichs von gleich oder größer als 2,5 d und gleich oder weniger als 6,5 d liegt.

2. Formmaterial nach Anspruch 1, wobei ein Aspektverhältnis des faserförmigen Füllstoffs (B1) gleich oder größer als 3 und gleich oder kleiner als 30 ist.

3. Formmaterial nach Anspruch 1 oder 2, wobei der faserförmige Füllstoff (B1) ausgewählt ist aus der Gruppe bestehend aus Glasfaser, Wollastonitfaser und Kohlefaser.

4. Formmaterial nach einem der Ansprüche 1 bis 3, wobei das Harz (A) ein Phenolharz oder ein Epoxidharz ist.

5. Formgegenstand, erhalten durch Formen des Formmaterials nach einem der Ansprüche 1 bis 4.

6. Formgegenstand nach Anspruch 5, wobei der Formgegenstand ein Innenteil von Automobilen ist.

7. Verfahren zur Herstellung eines Formgegenstands, umfassend:
einen Schritt des Formens des Formmaterials nach einem der Ansprüche 1 bis 4,
wobei der Schritt des Formens des Formmaterials durch Formpressen, Spritzpressen oder Spritzgießen durchgeführt wird.

8. Verfahren nach Anspruch 7, wobei der Formgegenstand ein Innenteil von Automobilen ist.

9. Verwendung des Formmaterials nach einem der Ansprüche 1 bis 4 zur Herstellung eines Innenteils von Automobilen.

## Revendications

1. Matériau de moulage comportant :
(A) une résine thermodurcissable ; et
(B) une charge,
dans lequel, à condition qu'une quantité totale du matériau de moulage soit de 100 parties en volume, une teneur en charge (B) est égale ou supérieure à 35 parties en volume et égale ou inférieure à 80 parties en volume,
la charge (B) contient une charge fibreuse (B1) et une charge de billes de verre sphériques (B2),
à condition qu'une quantité totale de la charge (B) soit de 100 parties en volume, une teneur en charge de billes de verre sphériques (B2) est égale ou supérieure à 40 parties en volume et égale ou inférieure à 95 parties en volume, et
à condition qu'un diamètre de fibre moyen en nombre de la charge fibreuse (B1) soit d, une taille de particule moyenne de la charge de billes de verre sphériques (B2), mesurée en utilisant un microscope électronique à balayage, est dans une plage égale ou supérieure à 2,5 d et égale ou inférieure à 6,5.

2. Matériau de moulage selon la revendication 1,
dans lequel un rapport d'aspect de la charge fibreuse (B1) est égal ou supérieur à 3 et égal ou inférieur à 30.

3. Matériau de moulage selon la revendication 1 ou 2,
dans lequel la charge fibreuse (B1) est choisie parmi le groupe constitué d'une fibre de verre, d'une fibre de wollastonite et d'une fibre de carbone.

4. Matériau de moulage selon l'une quelconque des revendications 1 à 3,
dans lequel la résine (A) est une résine phénolique ou une résine époxyde.

5. Article moulé obtenu en moulant le matériau de moulage selon l'une quelconque des revendications 1 à 4.

6. Article moulé selon la revendication 5, dans lequel l'article moulé est un élément interne d'automobiles.

7. Procédé pour fabriquer un article moulé, comportant :
une étape de moulage du matériau de moulage selon l'une quelconque des revendications 1 à 4,
dans lequel l'étape de moulage du matériau de moulage est réalisée par moulage par compression, moulage par transfert ou moulage par injection.

8. Procédé selon la revendication 7, dans lequel l'article moulé est un élément interne d'automobiles.

9. Utilisation du matériau de moulage selon l'une quelconque des revendications 1 à 4 pour la fabrication d'un élément interne d'automobiles.
